(19) Europäisches Patentamt
European Patent Office
Office européen des brevets

(11) Veröffentlichungsnummer: **0 156 131**
**B1**

(12) # EUROPÄISCHE PATENTSCHRIFT

(45) Veröffentlichungstag der Patentschrift: **27.04.88**

(51) Int. Cl.⁴: **C 08 J 5/04**, C 08 L 81/02, B 29 C 71/02

(21) Anmeldenummer: **85101245.0**

(22) Anmeldetag: **06.02.85**

(54) **Verfahren zur Herstellung von Faserverbundmaterialien.**

(30) Priorität: **16.02.84 DE 3405523**

(43) Veröffentlichungstag der Anmeldung: **02.10.85 Patentblatt 85/40**

(45) Bekanntmachung des Hinweises auf die Patenterteilung: **27.04.88 Patentblatt 88/17**

(84) Benannte Vertragsstaaten: **BE CH DE FR GB IT LI NL**

(56) Entgegenhaltungen:
**EP-A-0 056 703**
**EP-A-0 100 934**
**DE-A-2 156 346**

(73) Patentinhaber: **BASF Aktiengesellschaft, Carl-Bosch- Strasse 38, D-6700 Ludwigshafen (DE)**

(72) Erfinder: **Zeiner, Hartmut, Dr., Johann- Strauss-Strasse 13, D-6831 Plankstadt (DE)**
Erfinder: **Fischer, Juergen, Dr., Thomas- Mann-Strasse 62, D-6700 Ludwigshafen (DE)**
Erfinder: **Heinz, Gerhard, Dr., Im Vogelsang 2, D-6719 Weisenheim (DE)**
Erfinder: **Neumann, Peter, Dr., Franz- Schubert-Strasse 1, D-6908 Wiesloch (DE)**
Erfinder: **Nissen, Dietmar, Dr., Ziegelhaeuser Landstrasse 31, D-6900 Heidelberg (DE)**
Erfinder: **Schaefer, Gerhard, Dr., Schafrippel 2, D-6900 Heidelberg (DE)**

**EP 0 156 131 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Polyarylensulfidketone sind bekannt. Bevorzugt sind solche, welche die Struktur

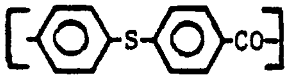

oder

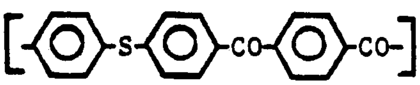

aufweisen.

Sie werden vorzugsweise hergestellt durch Umsetzung einer aromatischen Dihalogenverbindung, bei der jedes Halogenatom durch eine in para-Stellung stehende Ketogruppe aktiviert ist, mit einer im wesentlichen äquivalenten Menge eines Alkalimetallsulfids in einem polaren Lösungsmittel. Das Prinzip diese Reaktion ist z. B. in der DE-A-16 20 923 beschrieben.

Besonders bevorzugte aromatische Dihalogenverbindungen sind 4,4'-Difluorbenzophenon, 4,4-Dichlorbenzophenon, 1,4-Bis-(4-fluorbenzoyl)-benzol und 1,4-Bis-(4-chlorbenzoyl)-benzol. Daneben sind auch 4-Chlor-4'-fluorbenzo-phenon, 1-(4-Chlor-benzoyl)-4-(4-fluorbenzoyl)-benzo 1, 1,3-Bis-(4-chlorbenzoyl)-benzol, 1,5-Bis-(4-chlorbenzoyl)-naphthalin, 1-(4-Chlorbenzoyl)-diphenyloxid, 4,4'-Bis-(4-Chlorbenzoyl)-biphenyl und 2,5-Bis-(4-Chlorbenzoyl)-thiophen gut geeignet.

Die Dihalogenverbindungen können zu bis zu 5 Mol.%, vorzugsweise zu 0,2 bis 2 Mol.% durch Hexafluorbenzol, Hexachlorbenzol oder Pentachlorpyridin ersetzt werden. Diese Verbindungen werden vor oder während der Polykondensation zugesetzt und erlauben eine gezielte Vernetzung des Polymeren und damit eine gezielte Erhöhung der Viskosität.

Bevorzugte Alkalisulfide sind Natrium- und Kaliumsulfid, die im allgemeinen in Form ihrer Hydrate eingesetzt werden. Sie können gegebenenfalls zusammen mit Alkalihydroxiden und Alkalisulfiten oder -hydrogensulfiten verwendet werden. Das Alkalisulfid wird in etwa stöchiometrischen Mengen, vorzugsweise in Mengen von 0,85 bis 1,15 Mol.%, bezogen auf die Dihalogenverbindung, eingesetzt.

Geeignete polare Lösungsmittel sind hochsiedende Sulfoxide, Sulfone, Nitrile, Ether, Ketone und Alkohole. Bevorzugt sind N-Alkyllactame, die zusätzlich am Stickstoffatom einen Alkylrest mit 1 bis 6 C-Atomen, tragen, insbesondere N-Methylpyrrolidon.

Die Menge an Lösungsmittel beträgt vorzugsweise 2 bis 15 Mol pro Mol Alkalisulfid.

Die Kondensationstemperatur ist in der Regel 160 bis 300° C, bevorzugt 200 bis 280° C. Die Reaktionszeit kann bis zu 10 Stunden betragen, liegt jedoch vorzugsweise zwischen 0,2 und 5 Stunden. Eine stufenweise Steigerung der Reaktionstemperatur während dieser Zeit ist von Vorteil. Da die Reaktionstemperatur im allgemeinen höher liegt als der Siedepunkt des Lösungsmittelgemisches, wird vorzugsweise unter Anwendung von Überdruck gearbeitet.

Die Polykondensation kann nach Abkühlen des Reaktionsgemisches auf ca. 150° C und anschließendem Druckausgleich durch Einleiten von Methylchlorid abgestoppt werden. Die Reaktionszeit hierzu beträgt 0,1 bis 2, vorzugsweise 0,2 bis 0,5 Stunden.

Die Erfindung betrifft ein Verfahren zur Herstellung von Faserverbundmaterialien durch Imprägnieren von Endlosfasern oder Fasergebilden mit einer Schmelze einer Polyarylensulfidketons und Verformen des entstehenden Halbzeugs.

Faserverbundmaterialien auf Basis von hochtemperaturbeständigen thermoplastischen Kunststoffen werden bekanntlich durch Tränken der Fasern mit Thermoplastlösungen, Entfernen des Lösungsmittels und thermoplastisches Verformen des entstandenen Halbzeugs zu einem Fertigteil hergestellt. Ein derartiges Verfahren ist beispielsweise in der DE-A-2 156 346 beschrieben, wo Kohlenstoff-Fasern vorzugsweise mit Polyethersulfon-Lösungen getränkt werden. Auch das Imprägnieren mit einer Thermoplast-Schmelze ist dort angedeutet; im Falle des ebenfalls erwähnten Polysulfidketons

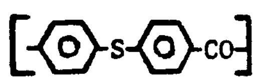

ist es in der Tat auch nicht möglich, mit einer Lösung zu tränken, da Polysulfidketon nicht löslich ist. Versucht man jedoch, Fasergebilde mit einer Schmelze eines Polyarylensulfidketons üblicher Viskosität zu imprägnieren, so stellt man fest, daß die Benetzung zu gering ist.

In der EP-A-56 703 wird vorgeschlagen, Fasergebilde mit Schmelzen niedermolekularer, niedrigviskoser thermoplastischer Polymerer zu imprägnieren. Die dabei entstehenden Faserverbundmaterialien zeigen jedoch - insbesondere bei teilkristallinen Thermoplasten - ein unbefriedigendes Zähigkeits- und Dehnungsverhalten. In der EP-A-56 703 ist zwar die Möglichkeit der nachträglichen Erhöhung des Molekulargewichts des thermoplastischen Polymeren angedeutet; die empfohlenen Methoden (Festphasenkondensation, Zusatz von Vernetzungsmitteln und Bestrahlung) führen jedoch zu unkontrollierbaren und unerwünschten Nebenreaktionen und somit zur Herabsetzung der mechanischen Eigenschaften der Fertigteile bzw. erfordern einen hohen apparativen Aufwand.

Der Erfindung lag nun die Aufgabe zugrunde, auf Basis von Polyarylensulfidketonen

Faserverbundmaterialien mit hoher Zähigkeit, guter Wärmeformbeständigkeit und Lösungsmittelbeständigkeit herzustellen.

Diese Aufgabe wird gelöst, wenn man Endlosfasern oder Fasergebilde mit einer Schmelze eines Polyarylensulfidketons imprägniert, das entstehende Halbzeug zu einem Fertigteil verformt und dieses mindestens 15 min lang auf Temperaturen oberhalb des Kristallitschmelzpunktes des Polyarylensulfidketons erhitzt, wobei dieses vernetzt.

Aufgrund der besonderen Struktur (Schwefelbrücke) der Polyarylensulfidketone ist diese Vernetzung ohne den Zusatz von chemischen Vernetzungsmitteln möglich. Durch die Vernetzung erhöht sich die Zähigkeit der Fertigteile, und die Lösungsmittelbeständigkeit wird verbessert.

Polyarylensulfidketone sind teilkristalline Thermoplaste. Ihr kristalliner Schmelzpunkt liegt im Bereich von 340 bis 420° C; die Glastemperatur Tg beträgt im unvernetzten Zustand 140 bis 180° C. Diese wird durch die erfindungsgemäße Vernetzung um mindestens 5, vorzugsweise mehr als 10 und insbesondere mehr als 20° C erhöht.

Das Imprägnieren der Endlosfasern wird vorzugsweise mit einer niedrigviskosen Schmelze eines niedermolekularen Polyarylensulfidketons durchgeführt, dessen reduzierte Viskosität $\eta_{red} = 0{,}1\text{-}0{,}5$ [dl.g$^{-1}$] beträgt. Die reduzierte Viskosität wird bei 25° C in 98 %-iger Schwefelsäure gemessen und nach der Formel $\eta_{red} = \frac{\eta_{spez}}{c}$ bestimmt. Die Polymerkonzentration c beträgt dabei 0,5 g/100 cm$^3$ Lösung. Solche niedermolekularen Polyarylensulfide können durch Anwendung eines geringen Überschusses an Dihalogenverbindung bzw. Alkalisulfid hergestellt werden.

Als Verstärkungsfasern kommen solche aus Glas, Kohlenstoff oder aromatischen Polyamiden in Frage. Sie können in Form von einzelnen Fadensträngen (Rovings), von Bändern, die aus mehreren nebeneinanderliegenden Rovings bestehen, oder von Geweben durch ein Tränkbad gezogen werden. Die Rovings sollen dabei möglichst gut gespreizt, d.h. flächig auseinander gezogen sein, was durch bekannte Vorrichtungen bewirkt werden kann. Die Temperatur der Polymerschmelze liegt dabei vorzugsweise unterhalb von 420° C, im Falle des Polysulfidketons

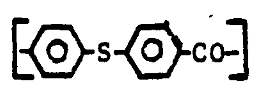

zwischen 350 und 380° C. Die Verweilzeit sollte zwischen etwa 1 und 10 min liegen. Bei zu hoher Schmelztemperatur und zu langer Verweilzeit kann unerwünschte vorzeitige Vernetzung eintreten.

Der Fasergehalt des Faserverbundmaterials soll zwischen 30 und 85, vorzugsweise zwischen 45 und 70 Vol.% liegen. Der Fasergehalt kann durch die Verweilzeit im Tränkbad, sowie durch danach angeordnete beheizte Kalander, in denen überschüssige Schmelze abgepreßt wird, beeinflußt werden. Anschließend können die getränkten Fasern abgekühlt und klebfrei auf Spulen gewickelt werden. Sie stellen ein lagerstabiles Halbzeug dar, das thermoplastisch weiterverarbeitbar ist. Man kann sie - gegebenenfalls auch ohne Abkühlen direkt nach dem Tränken - auf Dorne oder Wellen aufwickeln, dort bei Temperaturen oberhalb des Schmelzpunktes des Polyarylensulfidketons ablegen und im thermoplastischen Zustand zu Rohren formen. Flächige Halbzeuge können hergestellt werden, indem man imprägnierte, vorzugsweise 2 bis 150 cm breite Rovingbänder nach dem Abkühlen in plattenförmige Stücke schneidet oder endlos auf Spulen wickelt. Diese, vorzugsweise 0,1 bis 0,5 mm dicken, unidirektional faserverstärkten Prepregs können schichtenweise übereinandergestapelt werden, wobei die einzelnen Prepregs in beliebigen Winkeln zueinander gelegt werden können. Die Stapel können dann durch Verpressen bei Temperaturen oberhalb des Schmelzpunktes des Polyarylensulfidketons zu Fertigteilen verformt werden. Auf ähnliche Weise kann man imprägnierte Gewebe weiterverarbeiten.

Grundsätzlich ist es auch möglich, Polyarylensulfidketone in Pulverform oder als wäßrige Dispersion auf die Fasern aufzubringen, oder Folien bzw. Fasern aus den Polymeren zwischen Verstärkungsfaserschichten zu legen. Das Aufschmelzen des Polymeren erfolgt dann anschließend, vorzugsweise in einer Presse, wobei das Faserverbundmaterial gleichzeitig verformt wird. In diesem Fall kann man auch von höhermolekularen Polyarylensulfidketonen ausgehen, die eine reduzierte Viskosität $\eta$ red von 0,4 bis 0,8 [dl.g$^{-1}$] aufweisen. Die Verweilzeit in der Presse (unter Luftausschluß) beträgt hier etwa 0,5 bis 2 Stunden.

Wesentlich ist, daß das Faserverbundmaterial als Fertigteil anschließend an die Formgebung mindestens 15 min lang, bei Luftzutritt vorzugsweise 30 min bis 12 h und unter Inertgas vorzugsweise 2 bis 12 h lang, auf Temperaturen oberhalb des Kristallitschmelzpunktes des Polyarylensulfidketons erhitzt wird.

Die erfindungsgemäß hergestellten Faserverbundmaterialien können vor allem in der Luft- und Raumfahrt eingesetzt werden.

**Beispiel 1**

Poly-p-phenylensulfidketon (PSK) sus 4,4'-Difluorbenzophenon

In einem mit einem Destillationsaufsatz und Rührer ausgerüsteten Autoklaven werden 129 g Natriumsulfid-tri-hydrat (= 1,0 Mol $Na_2S$), 800 ml N-Me-thyl-2-pyrrolidon sowie feingemahlenes Natriumhydroxid (zur Neutralisation von

anwesendem Natriumhydrogensulfid) vorgelegt und langsam auf 210° C erhitzt.

Nach Erhalt von ca. 40 ml Destillat, das zum größten Teil aus Wasser besteht, läßt man das Reaktionsgemisch auf 40 bis 50° C abkühlen. Unter starkem Rühren werden sodann 218,2 g (1 Mol) 4,4'-Difluorbenzophenon und 2,1 g (3,3 Mol.%) Natriumsulfit (zur Zerstörung entstehender Disulfide) eingetragen. Das Reaktionsgefäß wird mit Stickstoff gespült. Nach Aufpressen von 5 bar $N_2$ wird das Reaktionsgemisch auf 250° C erwärmt und 4 h bei dieser Temperatur belassen. Nach Reaktionsende läßt man auf 100° C abkühlen, entspannt und entnimmt das Reaktionsgemisch.

Das entstandene PSK wird abgetrennt und sorgfältig mit heißem Wasser und heißem Aceton gewaschen, bis der Aschegehalt unter 0,5 % liegt. Nach ausgiebigem Trocknen erhält man einen beigen Feststoff mit einer Lösungsviskosität von $\eta_{red}=0{,}78$ [dl/g], einem Glaspunkt Tg von 170° C und einem kristallinen Schmelzpunkt Tm von 367° C.

**Beispiel 2**

Poly-p-phenylensulfidketon-keton (PSKK) aus 1,4-Bis-(4-fluorbenzoyl)-benzol

In einem mit Destillationsaufsatz, Wasserabscheider und Rührer ausgerüsteten Autoklaven werden 129 g Natriumsulfid-tri-hydrat (= 1 Mol $Na_2S$), 800 ml N-Methyl-2-pyrrolidon, 150 ml Toluol sowie feingemahlenes Natriumhydroxid (zur Neutralisation von anwesendem Natriumhydrogensulfid) vorgelegt und auf 160° C erhitzt.

Innerhalb von 90 min wird die stöchiometrische Menge an mobilem Kristallwasser ausgekreist (max. 2 Mol) und das Toluol vollständig abdestilliert. Man läßt auf 40 bis 50° C abkühlen und gibt unter starkem Rühren 322,3 g (1 Mol) 1,4-Bis-(4-fluorbenzoyl)-benzol und 2,1 g (3,3 Mol.%) Natriumsulfit (zur Beseitigung entstehender Disulfide) hinzu. Man spült das Reaktionsgefäß mit Stickstoff un läßt unter einem Vordruck von 5 bar $N_2$ 4 Stunden bei 250° C reagieren (Druckanstieg auf 10 bar). Nach Reaktionsende läßt man auf ca. 100° C abkühlen, entspannt und entnimmt das Reaktionsgemisch.

Das entstandene Produkt wird abgetrennt, mit heißem Wasser und heißem Aceton sorgfältig gewaschen (Aschegehalt 0,5 %) und getrocknet.

Der graue kristalline Feststoff hat einen krist. Schmelzpunkt von 406° C 05 und eine Glastempetatur von 169° C. Seine Lösungsviskosität wurde zu $\eta_{red}=0{,}68$ [dl/g] bestimmt.

**Beispiel 3**

Nach Beispiel 2 hergestelltes PSKK wurde pulverförmig auf ein Glasgewebe der Fa. Interglas aufgebracht. 15 Gewebelagen mit einem Thermoplastanteil von 45 Vol. % wurden übereinanderdrapiert und mit einer Plattenpresse bei 410° C und einem Druck von 150 bar 1 h lang gepreßt. Dabei wurde das Gewebe mit dem Polyarylensulfidketon imprägniert und zu einer Platte von 2 mm Stärke geformt. Sie wurde anschließend 2 h lang an der Luft auf 410° C erhitzt, wobei sich die Glastemperatur des PSKK um 50° C auf 225° C erhöhte. Das Fertigteil wird selbst in konzentrierter Schwefelsäure nicht angegriffen.

Beim Zugversuch (nach Luftfahrtnorm 29971) parallel zur Faserrichtung ergab sich ein E-Modul von ca. 19.000 $N.mm^{-2}$ und eine Zugfestigkeit von ca. 300 $N.mm^{-2}$. Diese mechanischen Eigenschaften bleiben über einer weiten Temperaturbereich fast konstant.

**Beispiel 4**

Eine Schar von 100 Kohlenstoffaser-Rovings mit jeweils 6000 Filamenten (der Fa. Toray) wurde parallel durch ein Bad mit einer Schmelze von PSK (hergestellt nach Beispiel 1) bei einer Temperatur von 380° C gezogen. Die Verweilzeit im Bad betrug 5 min. Anschließend durchläuft das getränkte Roving-Band ein beheiztes Kalibrierwalzenpaar, wird danach abgekühlt und in plattenförmige Stücke (Prepregs) geschnitten. Diese stellen ein lagerfähiges Halbzeug dar. Acht solcher Prepregs werden mit gleichsinniger Faserrichtung übereinanderdrapiert und zu einer 2 mm starken Platte verpreßt. Man benutzt dazu eine auf 200° C aufgeheizte Plattenpresse, in die man das vorher extern auf 400° C erhitzte Gelege einführt und bei 100 bis 150 bar verpreßt. Der Fasergehalt beträgt 55 Vol.%. Das fertigteil wird dann 2 h auf 420° C erhitzt, wobei die Glastemperatur Tg um 50° C auf 220° C anstieg.

Die mechanische Prüfung parallel zur Faserrichtung ergab eine Zugfestigkeit von 1950 $N.mm^{-2}$ und einen Zug-E-Modul von 120.000 $N.mm^{-2}$.

**Beispiel 5**

Ein Glasfaser-Roving der Fa. Gewetex (EC 14, 1200 tex) wurde, wie in Beispiel 4 beschrieben, durch ein PSK-Tränkbad gezogen. Der erhaltene "Prepreg-Roving" mit einem Fasergehalt von 65 Vol. % wurde nach dem Abkühlen endlos auf eine Spule gewickelt.

Dieses Halbzeug wurde wieder abgewickelt, auf 350° C vorgeheizt und auf einem auf 415° C beheizten Wickelkern von 70 mm Durchmesser in 8 Lagen nach dem Muster 90°/90°/-45°/+45°/+45°/-45°/90°/90° abgelegt. Das entstandene Rohr wurde 1 h lang auf 420° C erhitzt, wobei sich die Glastemperatur des PSK um 50° C auf 220° C ethöhte. Es ist als Fertigteil geeignet, hohe Torsionslasten auch bei erhöhten Temperaturen aufzunehmen.

**Patentansprüche**

1. Verfahren zur Herstellung von Faserverbundmaterialien durch Imprägnieren von Endlosfasern oder Fasergebilden mit einer Schmelze eines Polyarylensulfidketons und Verformen des entstehenden Halbzeugs zum Fertigteil, dadurch gekennzeichnet, daß das Fertigteil mindestens 15 min lang auf Temperaturen oberhalb des Kristallitschmelzpunktes des Polyarylensulfidketons erhitzt wird, wobei dieses vernetzt.

2. Verfahren nach Anspruch 1, dadurch gekennzeichnet, daß ein Polyarylensulfidketon der Struktur

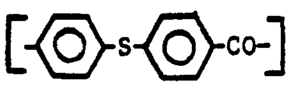

oder

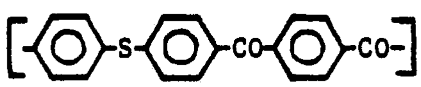

eingesetzt wird.

3. Verfahren nach Anspruch 1, dadurch gekennzeichnet, daß die reduzierte Viskosität des zum Imprägnieren verwendeten Polyarylensulfidketons $\eta_{red} = 0,1$ bis 0,5 [dl.g$^{-1}$] beträgt.

4. Verfahren nach Anspruch 1, dadurch gekennzeichnet, daß durch die Vernetzung die Glastemperatur Tg des Polyarylensulfidketons um mindestens 5° C, vorzugsweise um mindestens 10° C erhöht wird.

**Claims**

1. A process for the production of fiber-reinforced materials by impregnating continuous filaments or fibrous structures with a melt of a polyarylene sulfide ketone and shaping the resulting semi-finished product to give a finished article, wherein the latter is heated for not less than 15 minutes at temperatures above the crystallite melting point of the polyarylene sulfide ketone, the latter undergoing crosslinking.

2. A process as claimed in claim 1, wherein the polyarylene sulfide ketone used has the structure

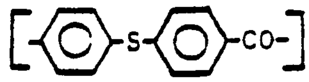

or

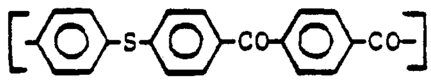

3. A process as claimed in claim 1, wherein the reduced viscosity $\eta_{red}$ of the polyarylene sulfide ketone used for impregnation is from 0.1 to 0.5 [dl.g$^{-1}$].

4. A process as claimed in claim 1, wherein the glass transition temperature Tg of the polyarylene sulfide ketone is increased by not less than 5° C, preferably by not less than 10° C, as a result of the crosslinking.

**Revendications**

1. Procédé de production de matériaux composites à base de fibres par l'imprégnation de fibres sans fin ou de produits fibreux avec une polyarylènesulfurecétone et formage du demi-produit obtenu en produit fini, caractérisé en ce que le produit fini est chauffé pendant au moins quinze minutes à des températures supérieures au point de fusion des cristallites, ce qui en provoque la réticulation.

2. Procédé suivant la revendication 1, caractérisé en ce que la polyarylènesulfurecétons mise en oeuvre possède la structure

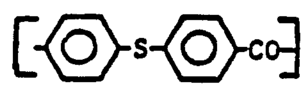

ou

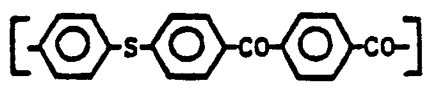

3. Procédé suivant la revendication 1, caractérisé en ce que la viscosité réduite $\eta_{red}$ de la polyarylènesulfurecétone utilisés pour l'imprégnation est comprise entre 0,1 et 0,5 [dl.g$^{-1}$].

4. Procédé suivant la revendication 1, caractérisé en ce que la réticulation provoque une élévation de la température de transition vitreuse $T_g$ de la polyarylènesulfurecétone d'au moins 5° et de préférence d'au moins 10° C.